# EUROPÄISCHE PATENTSCHRIFT

(11) **EP 2 570 567 B1**
(45) Veröffentlichungstag und Bekanntmachung des Hinweises auf die Patenterteilung: **17.08.2016**
(21) Anmeldenummer: 12196559.4
(22) Anmeldetag: 09.03.2004
(51) Int. Cl.: F03D 1/00, E04G 3/24, E04G 3/30

(54) **Wartungsplattform**
Maintenance platform
Plate-forme d'entretien

(30) Priorität: 11.03.2003 DE 10311674
(43) Veröffentlichungstag der Anmeldung: 20.03.2013
(62) Teilanmeldung aus: 04737297.4
(73) Patentinhaber: Aeroconcept Ingenieursgesellschaft für Luftfahrtechnik und Faserverbundtechnologie mbH, 52146 Würselen (DE)
(72) Erfinder: Lemburg, Christian, 52074 Aachen (DE); Lemburg, Johannes, 28327 Bremen (DE); Schäfer, Thomas, 52457 Aldenhoven (DE); Weber, Carsten, 52066 Aachen (DE)
(74) Vertreter: Eisenführ Speiser

(56) Entgegenhaltungen:
- DE-A1- 4 344 210
- DE-C1- 19 726 408
- DE-U- 29 603 278
- US-A- 3 907 066
- US-A- 4 082 161

## Beschreibung

Die Erfindung betrifft eine Wartungseinrichtung mit einer Wartungsplattform zur Aufhängung an Tragseilen für die Wartung von Rotorblättern von Windenergieanlagen.

Windenergieanlagen (WEA) zählen in der Bundesrepublik Deutschland rechtlich zu Bauwerken und unterliegen sowohl bei der Entwicklung, der Errichtung und auch bei ihrem Betrieb der Aufsicht der obersten Bauaufsichtsämter der Länder, bzw. der örtlich zuständigen Baubehörden.

Vor allem zur Aufrechterhaltung der betrieblichen Sicherheit wird von den zuständigen Behörden eine periodische Überwachung der Windenergienanlagen, insbesondere der Rotorblätter und der maschinenbaulichen Komponenten gefordert. Unabhängig davon ist eine regelmäßige Wartung und Instandhaltung unerlässlich für eine maximale Verfügbarkeit der Windenergieanlagen.

In den ersten Jahren der Windkraftnutzung wurden zur Kontrolle, Wartung und Instandhaltung der Rotorblätter vorwiegend LKW gestützte Teleskoparbeitsbühnen, sogenannte Steiger, eingesetzt.

Aufgrund der rasant anwachsenden Nabenhöhen der Windenergieanlagen sowie ausgehend von langjährigen Erfahrungen im Bereich der Fassadenreinigung von Gebäuden, entstanden mit dem verstärkten Ausbau der Windenergienutzung in Deutschland modifizierte hochziehbare Personenaufnahmemittel (PAM) zur Wartung, Kontrolle und Instandsetzung von Rotorblättern an Windenergieanlagen. Ausführungsbeispiele derartiger Personenaufnahmemittel sind in einigen Patenten, Patentanmeldungen sowie Gebrauchsmustern beschrieben worden. Allen Lösungen gemeinsam ist, dass Kontroll-, Wartungs- und Instandsetzungsarbeiten an einem senkrecht nach unten stehenden Rotorblatt ausgeführt werden. Zur Bearbeitung aller Rotorblätter wird der Rotor sukzessive weitergedreht.

Mit dem Größenwachstum der Windenergieanlagen sowohl in Bezug auf ihre Nabenhöhe, als auch in Bezug auf die spezifischen Abmaße der Rotorblätter in Verbindung mit dem Wunsch der Windenergienutzung auf See ergeben sich zwangsläufig Anforderungen an Personenaufnahmemittel, welche mit den bis heute existierenden Konstruktionen nicht oder nur teilweise erfüllt werden können. So ist es für möglichst effiziente Kontroll-, Wartungs- und Instandsetzungsarbeiten an allen Rotorblättern einer Windenergieanlage erforderlich, die Aufhängung eines Personenaufnahmemittels derart zu wählen, dass der Rotor auch bei angehängtem Personenaufnahmemittel gedreht werden kann. Eine Aufhängung an den Rotorblättern selbst - wie z.B. aus DE 296 03 278 U1 bekannt - hat beispielsweise den Nachteil, dass für eine Bearbeitung des nächsten Rotorblattes die Aufhängung des Personenaufnahmemittels zunächst demontiert und nach dem Weiterdrehen des Rotors erneut montiert werden muss. Sofern Instandsetzungsarbeiten in Bereichen durchgeführt werden, in denen sich die Personenaufnahmemittel-Aufhängung befindet, wirkt sich eine derartige Aufhängung doppelt ungünstig aus. Da im Rahmen von Wartungs- und Instandsetzungsarbeiten an Rotorblättern vor allem Laminier- und Lackierarbeiten erfolgen, kann ein Umhängen der Personenaufnahmemittel-Aufhängungen erst nach einer vollständigen Durchhärtung, etwa der Lackierung, in den Aufhängungsbereichen erfolgen.

DE 296 03 278 U1 offenbart den einleitenden Teil des Anspruchs 1.

Existierende Personenaufnahmemittel welche nicht an den Rotorblättern selbst, sondern am Maschinenhaus aufgehängt sind, haben den Nachteil, dass bei diesen zwar der Rotor gedreht werden kann, während das Personenaufnahmemittel angehängt ist, dabei jedoch eine Abspannung zum Boden entspannt werden muss. Für Anwendungen im Offshore-Bereich scheiden jene Lösungen selbstverständlich aus.

Allen bisherigen Lösungen gemeinsam ist die fehlende Flexibilität der Personenaufnahmemittel, sich während des Betriebs den Querschnittsänderungen des Werkstücks (hier der Rotorblätter) anpassen zu können.

Je größer Rotorblätter werden, umso größer werden der Flanschdurchmesser und die größte Blatttiefe. Die Rotorblattspitze usw. vor allem ihre Flügeldicke dagegen bleibt in etwa gleich groß - unabhängig davon, ob es sich um ein 20 m langes oder 40 m langes Rotorblatt handelt. Das hat zur Folge, dass eine Bearbeitung der Rotorblätter im Flanschbereich bzw. im oberen Drittel zur Rotorblattnabe hin sehr gut erfolgen kann, während Arbeiten zur Blattspitze hin zunehmend schlechter ausgeführt werden können. Der Grund liegt in einer Vergrößerung des Abstandes zwischen Rotorblatt- bzw. Werkstückoberfläche und dem nächsten vorderen Handlauf (gem. Def. der DIN EN 1808) des Personenaufnahmemittels, welcher maßgeblich durch die Greifreichweite des Arbeitspersonals begrenzt ist.

Das Ziel des hier vorgelegten Entwurfs ist es, eine möglichst universell - insbesondere auch für den Offshore-Einsatz - einsetzbare, an Seilen aufgehängte Arbeits- oder Wartungsplattform herzustellen, welche einfach, ohne bauliche Veränderungen während des Betriebs, sich voneinander stark unterscheidende Arbeitsräume erzeugen kann.

Als Arbeitsraum wird hierbei der von der Arbeitsplattform umschlossene innere Querschnitt verstanden, in welchem sich die zu bearbeitenden Werkstücke befinden. Dies können insbesondere, aber nicht notwendigerweise ausschließlich, Rotorblätter von Windenergieanlagen sein, sondern z. B. auch Masten, Schornsteine o. ä.

Das zuvor genannte Ziel wird erfindungsgemäß durch eine Wartungseinrichtung gemäß Anspruch 1 für die Wartung von Rotorblättern von Windenergieanlagen mit einem Turm, einer Gondel mit einer Rotorblattnabe und einem Rotor mit Rotorblättern erreicht, wobei die Wartungseinrichtung eine Wartungsplattform zur Aufhängung an Tragseilen aufweist. Die Wartungseinrichtung weist mindestens drei Tragseile auf und alle Tragseile sind so geführt, dass keines der Tragseile eine von den Rotorblättern der jeweiligen Windenergieanlage definierte Rotorebene kreuzt, indem wenigstens eines der Tragseile im Betrieb mittels einer Seilaufhängung an der Rotorblattnabe der jeweiligen Windenergieanlage befestigt ist und zwar auf einer turmabgewandten Seite der Rotorebene der jeweiligen Windenergieanlage, während zwei weitere Tragseile im Betrieb an der Gondel der jeweiligen Windenergieanlage befestigt sind und auf einer turmnahen Seite der Rotorebene zwischen Rotorebene und Turm verlaufen.

Die Wartungsplattform ist vorzugsweise von wenigstens zwei Teilplattformen gebildet, welche eine Arbeitsebene definieren und welche über ein Schwenkgelenk um eine zur Arbeitsebene im Wesentlichen senkrecht verlaufende Schwenkachse schwenkbar miteinander verbunden sind.

Eine solche Wartungsplattform beseitigt zum einen den bisher vorhandenen Mangel existierender Personenaufnahmemittel sich flexibel Werkstücken anzupassen, deren senkrechte Querschnittsprojektion sich über den Verfahrweg stark ändert. Eine simultane Bearbeitung des Werkstückes durch das Arbeitspersonal an beliebigen Stellen des Werkstückumfanges ist dadurch jederzeit möglich.

In einer bevorzugten Ausführungsvariante weist die Wartungsplattform vier Teilplattformen auf, die über vier Schwenkgelenke zu einer geschlossenen Gliederkette, d.h. einem Viergelenk miteinander verbunden sind, so dass jede Teilplattform zwei Schwenkgelenke aufweist, mit denen diese Teilplattform mit zwei benachbarten Teilplattformen schwenkbar verbunden ist. Die Ausführung in Form einer geschlossenen Gliederkette bzw. in Form eines Viergelenkes führt dazu, dass die Wartungsplattform den Arbeitsraum vollständig umschließt und so ein Zugang zu einem zu wartenden Rotorblatt von allen Seiten ermöglicht. Außerdem erhöht die geschlossene Ausführung natürlich die Stabilität der Wartungsplattform. Durch Einfügen von Zwischensegmenten in jeder Einzelplattform vor Arbeitsbeginn lassen sich zudem auf einfache Weise auch Rotorblätter mit stark voneinander abweichenden Geometriedaten (insbesondere der Flanschdurchmesser und maximalen Flügeltiefe) befahren. In einer vorteilhaften Ausführungsvariante sind die Teilplattformen dazu ausgebildet, durch Einfügen von Zwischensegmenten vergrößert zu werden.

Vorzugsweise ragt mindestens eine der Teilplattformen in das Innere eines des durch die vier Schwenkgelenke definierten Vierecks. In einer besonders bevorzugten Ausführungsvariante ragen Teilabschnitte aller vier Teilplattformen in das Innere des durch die vier Schwenkgelenke als Eckpunkte definierten Vierecks. Der Arbeitsraum ist somit kleiner als das durch die vier Schwenkgelenke definierte Viereck. Auf diese Weise können auch die schmalen Rotorblattspitzen von den nah an das Rotorblatt heranragenden Teilabschnitten der Teilplattformen gut erreicht werden. Andererseits kann der Arbeitsraum durch Schwenken der Vierteilplattformen auch so erweitert werden, dass der Arbeitsraum ausreicht, um ein Rotorblatt in der Nähe der Blattwurzel aufzunehmen, wo das Rotorblatt die größten Ausmaße aufweist. Die vier TeilPlattformen der Wartungsplattformen definieren nicht nur den Arbeitsraum im Inneren, sondern außerdem eine Außenkontur. In einer bevorzugten Ausführungsvariante sind wenigstens zwei der vier Schwenkgelenke im Bereich dieser Außenkontur angeordnet. Diese zwei Schwenkgelenke sind vorzugsweise nicht benachbart, sondern einander gegenüberliegend.

Zum Einstellen der Teilplattformen ist vorzugsweise je Freiheitsgrad ein Antrieb vorgesehen, der z. B. zwei der vorzugsweise vier Teilplattformen so miteinander verbindet, dass sich diese beiden Teilplattformen und mit diesen auch die übrigen Teilplattformen in der Arbeitsebene relativ zueinander mit Hilfe des Antriebs schwenken lassen. Der Antrieb für das Verschwenken der Teilplattformen ist vorzugsweise ein Spindelantrieb, der zwei der vorzugsweise vier Teilplattformen so miteinander verbindet und relativ so zu dem diese Teilplattformen verbindenden Schwenkgelenk angeordnet ist, dass sich diese beiden Teilplattformen und mit diesen auch die übrigen Teilplattformen in der Arbeitsebene relativ zueinander mit Hilfe des Spindelantriebs schwenken lassen. Alternativ kann der Antrieb auch in den Schwenkgelenken selbst angeordnet sein. Insgesamt erlaubt es eine Wartungsplattform mit mindestens vier Teilplattformen und mindestens vier, diese Teilplattformen miteinander verbindenden Schwenkgelenken ein Viergelenk zu verwirklichen, welches eine variable Innenkontur zulässt und es so ermöglicht, die Wartungsplattform während des Betriebes auf einfache Weise unterschiedlichen Querschnitten anzupassen.

Außerdem weist die Wartungsplattform vorzugsweise drei Seilwinschen auf, mit denen die Wartungsplattform mit drei Tragseilen verfahrbar zu verbinden ist. Die Seilwinschen sind mit Motoren versehen, mit denen die Seilwinschen derart anzutreiben sind, dass die sich bei drehenden Seilwinschen ergebende Verfahrgeschwindigkeit aller drei Seilwinschen identisch ist. Vorzugsweise haben daher die Seilwinschen sämtlich einen identischen Trommeldurchmesser und werden von Elektromotoren mit einheitlicher Drehzahl angetrieben.

Die Wartungsplattform ist vorzugsweise Teil einer Wartungseinrichtung, bei der die Wartungsplattform vorzugsweise über die vorgenannten Seilwinschen an drei Tragseilen aufgehängt ist, von denen wenigstens eines an einer Seilaufhängung aufgehängt ist, und zwar auf einer turmabgewandten Seite einer Rotorebene einer Windenergieanlage. Der Begriff turmabgewandte Seite bezieht sich dabei auf die durch die von den Rotorblättern aufgespannte Ebene, in der die Rotorblätter rotieren sowie auf den Turm der Windenergieanlage, an dessen oberen Ende die Rotorblätter üblicherweise an einer in einer horizontalen Ebene schwenkbaren Gondel drehbar gelagert sind, so dass die Rotorblattebene im wesentlichen senkrecht und parallel zu dem Turm verläuft. Alle Trag- und ggf. Sicherungsseile sind so geführt, dass keines der Seile die Rotorebene kreuzt.

Mit der vorgelegten Lösung ist es möglich, den Rotor zu drehen, während das Personenaufnahmemittel angehängt ist. Gleichzeitig sind dabei die Trag- und Sicherungsseile nicht am Boden befestigt. Damit eignet sich die vorgelegte Konstruktion gleichermaßen für den Onshorewie auch den Offshore-Einsatz.

Die Seilaufhängung weist vorzugsweise eine durchmesserverstellbare vorzugsweise Drei-Punkt-Befestigung für die Befestigung der Seilaufhängung an einer Rotorblattnabe auf.

Außerdem besitzt die Seilaufhängung vorzugsweise eine Seilaufnahme, an der wenigstens eines der Tragseile zu befestigen ist. Die Seilaufnahme ist bezüglich der übrigen Seilaufhängung vorzugsweise frei drehbar ausgeführt und zwar um eine Drehachse, die der Rotationsachse der Rotorblätter entspricht. Vorzugsweise verläuft diese Drehachse durch das Zentrum eines durch die Drei-Punkt-Befestigung definierten Dreiecks der Befestigungspunkte. Die Drehachse steht dabei senkrecht auf der durch die drei Befestigungspunkte definierten Ebene.

Die Tauglichkeit der vorliegenden Konstruktion wird weiterhin durch die Aufhängung an mindestens zwei Punkten ermöglicht, von dem mindestens einer mittels der Seilaufhängung an der Rotorblattnabe vor der Rotorebene befestigt ist. Die Seilaufhängung dreht sich mit dem Rotor, ohne dass sich das Trag- und Sicherungsseil mit dreht. Dadurch wird das Verdrillen der Seile verhindert.

Ein weiteres vorteilhaftes Merkmal der Wartungsplattform stellen Handläufe an den Teilplattformen dar. Diese Handläufe der einzelnen Plattformen weisen Rohre auf, in denen ein Seil längsverschieblich geführt ist, welches die Handläufe mehrerer Teilplattformen miteinander verbindet und aufgrund seiner Längsverschieblichkeit sich beim Verschwenken der Teilplattformen ergebende Abstandsänderungen zwischen den Handläufen verschiedener Teilplattformen ausgleichen kann. Vorzugsweise sind hierzu zwei Seile vorgesehen, die sich im Bereich eines der Schwenkgelenke, vorzugsweise des turmabgewandten Schwenkgelenkes, überlappen. Die Seile haben zusätzlich zum Abstandausgleich den Vorteil, dass sie die Belastbarkeit der einzelnen Handläufe deutlich erhöhen und so zur Sicherheit des Wartungspersonals auf der Wartungsplattform beitragen.

Die Erfindung soll nun anhand von Ausführungsbeispielen mit Bezug auf die beigefügten Zeichnungen näher erläutert werden. In den Zeichnungen zeigen:
- Figur 1: einen oberen Abschnitt einer Windenergieanlage mit daran aufgehangener Wartungsplattform
- Figur 2: einen Ausschnitt aus Figur 1 mit detaillierter Darstellung der Wartungsplattform
- Figur 3: die Wartungsplattform aus Figuren 1 und 2 (Einzeldarstellung)
- Figur 4: die Wartungsplattform aus Figur 3 mit verschwenkten Teilplattformen
- Figur 5: Prinzipskizzen zur Erläuterung der Verschwenkbarkeit der Wartungsplattform
- Figur 6: ein Detail der Wartungsplattform aus den Figuren 1 bis 4
- Figur 7: eine Seilwinsch für die Wartungsplattform aus den Figuren 1 bis 4 und 6
- Figur 8: eine Seilaufhängung für eine Wartungseinrichtung mit einer Wartungsplattform gemäß den Figuren 1 bis 4 und 6
- Figur 9: ein Detail aus Figur 2 zur Darstellung der Befestigung der Seilaufhängung aus Figur 8 an der Rotorblattnabe einer Windenergieanlage aus Figur 1

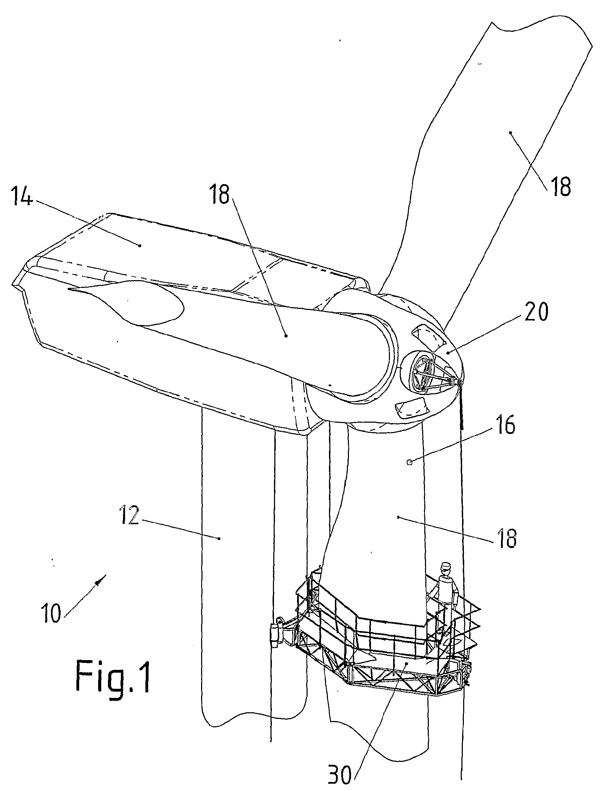

Die in Figur 1 dargestellte Windenergieanlage 10 umfasst einen Turm 12, eine am oberen Ende des Turmes 12 horizontal schwenkbar befestigte Gondel 14 und einen Rotor 16, der in der Gondel 14 um eine horizontale Rotationsachse drehbar aufgehängt ist. Der Rotor 16 umfasst drei Rotorblätter 18, die gemeinsam an einer Rotorblattnabe 20 befestigt sind.

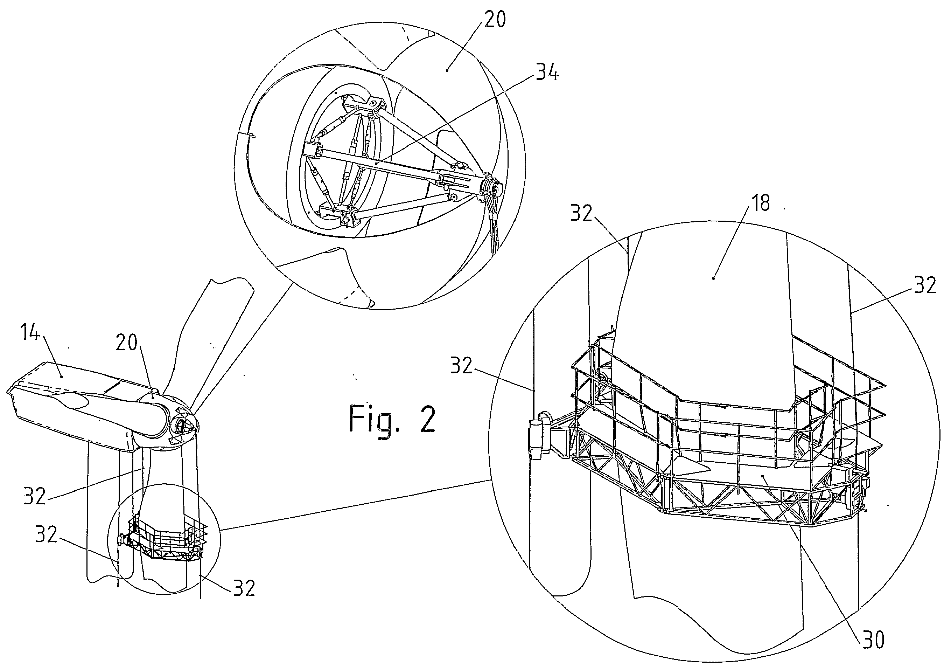

An der Gondel 14 und der Rotorblattnabe 20 ist eine Wartungsplattform 30 mittels dreier Tragseile 32 aufgehängt. Eines der Tragseile 32 ist dabei mittels einer Seilaufhängung 34 an der Rotorblattnabe 20 befestigt, während zwei weitere Tragseile 32 an der Gondel 14 befestigt sind. Dies ist in Figur 2 detaillierter dargestellt. Die Wartungsplattform 30, die Tragseile 32 und die Seilaufhängung 34 bilden zusammen eine Wartungseinrichtung.

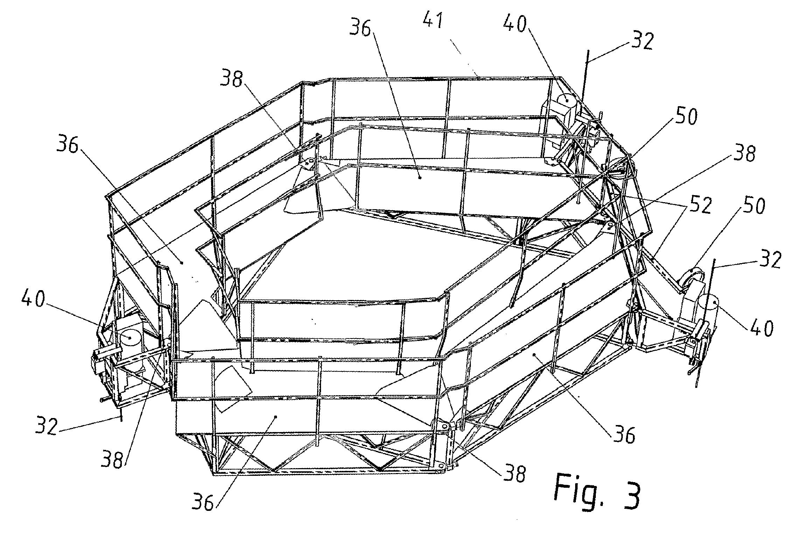

In Figur 3 ist die Wartungsplattform 30 in Einzeldarstellung dargestellt. Die Wartungsplattform 30 setzt sich aus vier Teilplattformen 36 zusammen, die insgesamt über vier Schwenkgelenke 38 zu einer geschlossenen Gliederkette in Form eines Viergelenkes schwenkbar miteinander verbunden sind.

Außerdem sind in Figur 3 drei Seilwinschen 40 dargestellt, die mit Hilfe eines integrierten Fahrmotors dazu dienen, die Wartungsplattform 30 entlang von Tragseilen 32 in der Höhe zu verfahren.

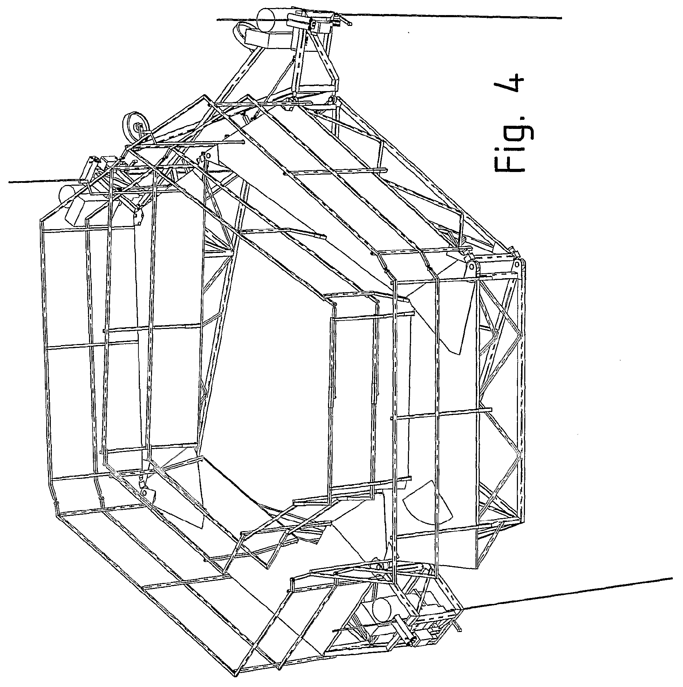

Wesentliche Eigenschaft der Wartungsplattform 30 ist, dass der von der Wartungsplattform 30 eingeschlossene Arbeitsraum durch Verschwenken der vier Teilplattformen 36 relativ zueinander veränderlich ist. Dies ergibt sich durch Vergleich der beiden Schwenkstellungen in Figur 3 und Figur 4. Auf diese Weise ist es möglich, den von den vier Teilplattformen 36 eingeschlossenen Arbeitsraum an die Kontur eines zu wartenden Rotorblattes optimal anzupassen.

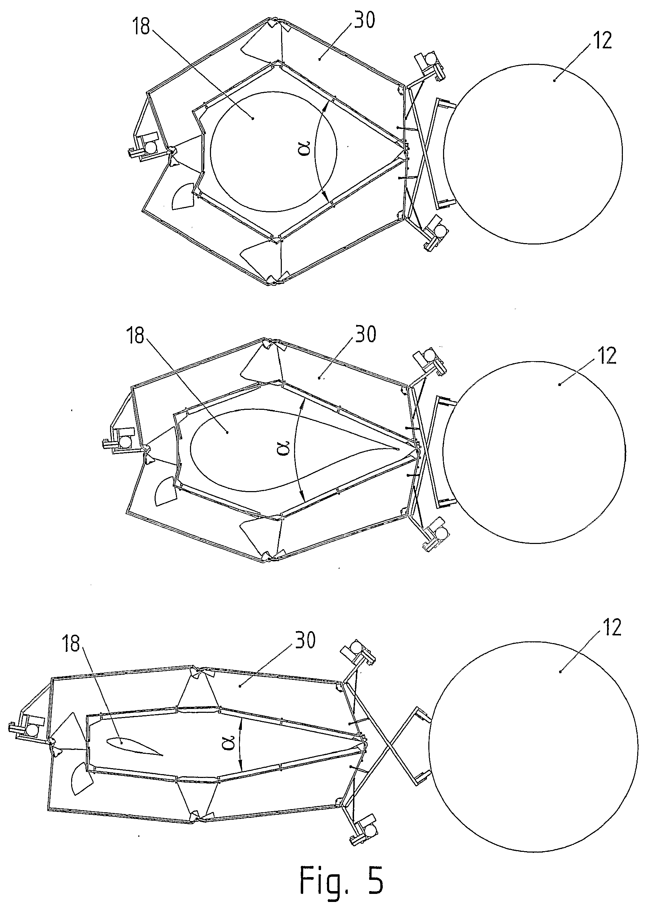

Die Teilplattformen 36 sind mit Handläufen 41 versehen, die dem Schutz des Wartungspersonals dienen. Die Handläufe sind rohrförmig ausgebildet. Wenigstens innerhalb der außenliegenden Handläufe sind insgesamt zwei Stahlseile längsverschieblich angeordnet, die sich jeweils auf einer Seite der Wartungsplattform vom turmnahen Schwenkgelenk bis über dass turmferne Schwenkgelenk hinaus erstrecken und sich somit im Bereich des turmfernen Schwenkgelenkes teilweise überlappen. Die jeweiligen Enden beider Stahlseile sind in der Nähe eines jeweiligen Pfostens für die Handläufe befestigt. Zwischen den Befestigungspunkten sind die Stahlseile innerhalb der rohrförmigen Handläufe längsverschieblich und überbrücken die Handläufe einzelner Plattformen im Bereich der drei turmferneren Schwenkgelenke. Indem sich die Stahlseile beim Verschwenken der Teilplattformen relativ zueinander in den Handläufen längs verschieben können, können die Stahlseile Abstandsänderungen zwischen den einzelnen Handläufen ausgleichen; siehe Figur 5.

Figur 5 zeigt vier Schnitte durch ein Rotorblatt 18 und den Turm 12 in verschiedenen Turmhöhen in Zusammenschau mit einer jeweils an den jeweiligen Rotorblattquerschnitt angepassten Wartungsplattform 30. Die vier Abbildungen in Figur 5 zeigen jeweils die gleiche Arbeitsplattform für verschiedene Turmhöhen bzw. verschiedene Abstände von der Rotorblattnabe. In Figur 5 ist eingezeichnet, wie sich die Geometrie der gesamten Wartungsplattform 30 durch Verstellen des Winkels α verändert.

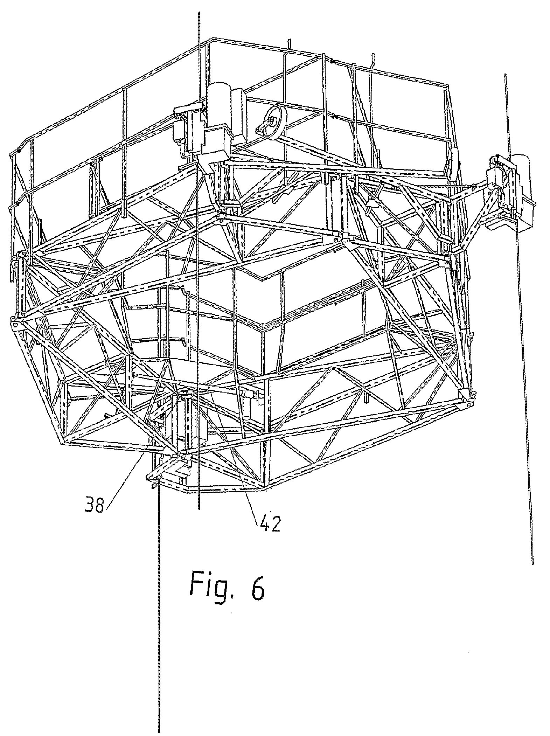

Figur 6 ist zu entnehmen, dass die Verstellung des Winkels α mit Hilfe eines Spindelantriebs 42 erfolgt, der in Nachbarschaft zu dem in Figur 6 dargestellten Schwenkgelenk 38 angeordnet ist.

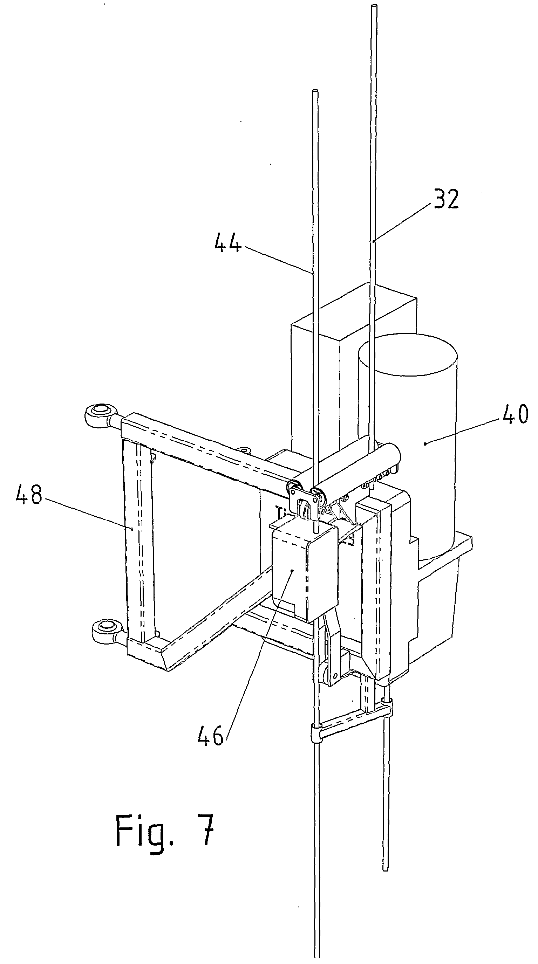

Figur 7 zeigt eine Seilwinsch 40 in Einzeldarstellung. Es ist zu erkennen, dass neben dem Tragseil 32 auch ein Sicherungsseil 44 vorgesehen ist, welches wie bei einem Fahrstuhl mit einem Blockstopp 46 zusammenwirkt und ein Abstürzen der Wartungsplattform 30 verhindert. Die beiden turmnahen Seilwinschen 40 sind, wie Figur 7 und aber auch Figuren 3 und 4 zu entnehmen ist, an schwenkbaren Auslegern 48 mit der Wartungsplattform 30 verbunden.

Zurückkommend auf Figur 5 sei darauf hingewiesen, dass der Abstand der Wartungsplattform 30 vom Turm je nach Abstand von der Rotorblattnabe bzw. je nach Turmhöhe anders einzustellen ist. Dies geschieht mit Hilfe von Stützrollen 50, die über feste Ausleger 52 mit jeweils einer Teilplattform 36 der Wartungsplattform 30 verbunden sind; siehe Figur 3 und 4. Die Anordnung der Stützrollen 50 an festen Auslegern 52 in der in Figur 3 und 4 abgebildeten Art bewirkt, dass sich mit Verstellen des Winkels α jeweils auch ein geeigneter Abstand der Wartungsplattform 30 vom Turm 12 ergibt. Die Geometrie der festen Ausleger 52 ist entsprechend gewählt.

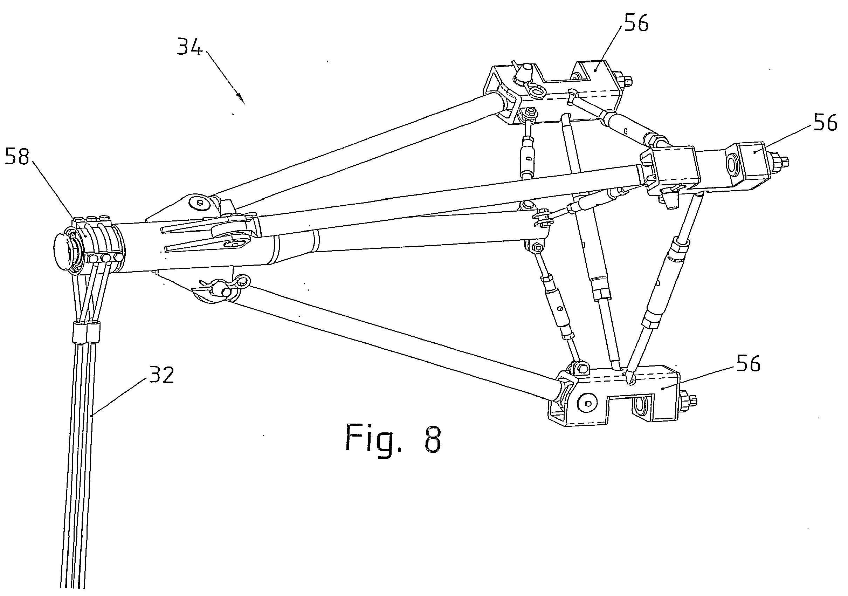

Wie bereits Figur 1 zu entnehmen ist, ist die Wartungsplattform 30 über mindestens drei Tragseile 32 an der Gondel 14 bzw. der Rotorblattnabe 20 der Windkraftanlage 10 aufgehängt. Die beiden turmnahen Tragseile 32 sind dabei an der Gondel 14 befestigt. Das turmabgewandte Tragseil erstreckt sich auf der turmabgewandten Seite der Rotorebene und ist an der Seilaufhängung 34 befestigt. Die Seilaufhängung 34 ist in Figur 8 im Detail dargestellt. Die Seilaufhängung weist demnach drei Befestigungsklemmen 56 auf, die auf einem im Durchmesser verstellbaren Kreis angeordnet sind. Mit den drei Befestigungsklemmen 56 ist eine Seilaufnahme 58 verbunden, an der das turmabgewandte Tragseil 32 sowie das entsprechende Sicherungsseil befestigt sind. Die Seilaufnahme 58 ist um eine Drehachse schwenkbar, die zentral durch das von den drei Befestigungsklemmen 56 definierte Dreieck verläuft und sich senkrecht zu einer durch die drei Befestigungsklemmen 56 definierten Ebene erstreckt.

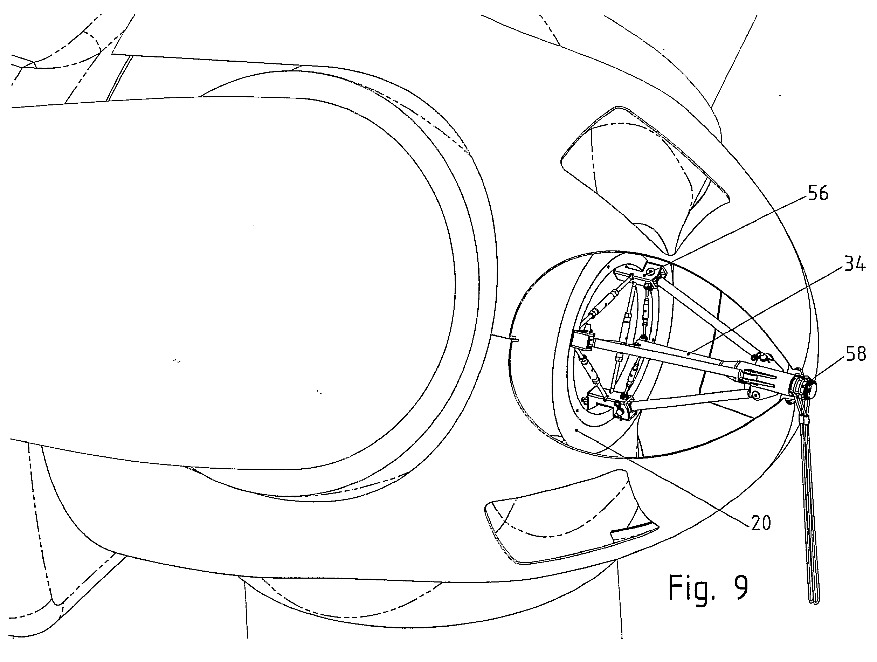

Figur 9 zeigt die Aufhängung 34 in ihrem an der Rotorblattnabe 20 der Windenergieanlage befestigten Zustand. Es ist insbesondere zu erkennen, dass die Drehachse der Seilaufnahme 58 identisch mit der Rotordrehachse ist. Außerdem ist zu erkennen, dass die Befestigungsklemmen 56 so ausgeführt sind, dass die Befestigung der Seilaufhängung 34 an der Rotorblattnabe 20 formschlüssig ist und damit unabhängig von der Klemmkraft der Befestigungsklemmen 56 sichert.

## Patentansprüche

1. Wartungseinrichtung mit einer Wartungsplattform (30) zur Aufhängung an Tragseilen (32) für die Wartung von Rotorblättern (18) von Windenergieanlagen (10) mit einem Turm (12), einer Gondel mit einer Rotorblattnabe (20) und einem Rotor (16) mit Rotorblättern (18), wobei die Wartungseinrichtung mindestens drei Tragseile aufweist und alle Tragseile so geführt sind, dass keines der Tragseile eine von den Rotorblättern der jeweiligen Windenergieanlage definierte Rotorebene kreuzt,
**dadurch gekennzeichnet, dass**
wenigstens eines der Tragseile im Betrieb mittels einer Seilaufhängung an der Rotorblattnabe (20) der jeweiligen Windenergieanlage befestigt ist und zwar auf einer turmabgewandten Seite der Rotorebene der jeweiligen Windenergieanlage, während zwei weitere Tragseile im Betrieb an der Gondel (14) der jeweiligen Windenergieanlage befestigt sind und auf einer turmnahen Seite der Rotorebene zwischen Rotorebene und Turm verlaufen.

2. Wartungseinrichtung gemäß Anspruch 1, **dadurch gekennzeichnet, dass** die Seilaufhängung eine durchmesserverstellbare Drei-Punkt-Befestigung für die Befestigung der Seilaufhängung (34) an der Rotorblattnabe (20) der Windenergieanlage aufweist.

3. Wartungseinrichtung nach Anspruch 2, **dadurch gekennzeichnet, dass** die Seilaufhängung eine Seilaufnahme (58) aufweist, die um eine senkrecht zu einer durch die Drei-Punkt-Befestigung definierte Befestigungsebene verlaufende Drehachse frei drehbar ausgeführt ist.

4. Wartungseinrichtung nach Anspruch 3, **gekennzeichnet dadurch, dass** die Drehachse der Seilaufnahme im Wesentlichen mit der Rotorachse übereinstimmt.

5. Wartungseinrichtung nach Anspruch 2, **gekennzeichnet dadurch, dass** die Seilaufhängung ausgebildet ist, ein Verdrillen des an ihr befestigten Seiles bei Drehen des Rotors zu verhindern.

6. Wartungseinrichtung gemäß Anspruch 1, bei der die Wartungsplattform (30) von mindestens zwei Teilplattformen (36) gebildet ist, die eine Arbeitsebene definieren, wobei die Teilplattformen (36) über ein Schwenkgelenk (38) um eine zur Arbeitsebene im wesentlichen senkrecht verlaufende Schwenkachse schwenkbar miteinander verbunden sind.

7. Wartungseinrichtung gemäß Anspruch 6, bei der die Wartungsplattform (30) vier Teilplattformen (36) aufweist, die über vier Schwenkgelenke (38) zu einer geschlossenen Gliederkette miteinander verbunden sind, so dass jede Teilplattform (36) mit zwei Schwenkgelenken (38) verbunden ist.

8. Wartungseinrichtung gemäß Anspruch 7, bei der sich wenigstens eine der Teilplattformen (36) in das Innere eines Vierecks erstrecken, dessen Eckpunkte durch die vier Schwenkgelenke (38) gegeben sind.

9. Wartungseinrichtung gemäß Anspruch 8, bei der Teilabschnitte aller vier Teilplattformen (36) in das Innere des durch die vier Schwenkgelenke (38) definierten Vierecks ragen.

10. Wartungseinrichtung nach einem der Ansprüche 6 bis 9, bei der durch die Teilplattformen (36) ein von diesen umschlossener Arbeitsraum sowie eine Außenkontur definiert ist, wobei wenigstens zwei einander nicht benachbarte Schwenkgelenke (38) im Bereich der Außenkontur angeordnet sind.

11. Wartungseinrichtung nach einem der Ansprüche 6 bis 10, mit einen Spindelantrieb (42), der zwei der Teilplattformen (36) verstellbar miteinander verbindet, wobei der Spindelantrieb (42) relativ zu dem die beiden Teilplattformen (36) ebenfalls verbindenden Schwenkgelenk (38) so angeordnet ist, dass sich beide Teilplattformen (36) und mit diesen auch die übrigen Teilplattformen (36) in der Arbeitsebene relativ zueinander mit Hilfe des Spindelantriebs (42) verschwenken lassen.

12. Wartungseinrichtung nach einem der Ansprüche 6 bis 11, mit drei Seilwinschen (40), mit denen die Wartungsplattform mit drei Tragseilen (32) verfahrbar zu verbinden ist.

13. Wartungseinrichtung nach Anspruch 12, bei der die Seilwinschen (40) mit jeweils einem Elektromotor versehen sind, wobei die Elektromotoren ausgebildet sind, eine einheitliche Verfahrgeschwindigkeit einzuhalten.

## Claims

1. Maintenance facility comprising a maintenance platform (30) for suspending on support cables (32) for the maintenance of rotor blades (18) of wind turbines (10) that have a tower (12), a nacelle having a rotor blade hub (20) and a rotor (16) having rotor blades (18), the maintenance facility having at least three support cables and all the support cables being guided in such a way that none of the support cables crosses a rotor plane defined by the rotor blades of the relevant wind turbine,
**characterised in that**,
during operation, at least one of the support cables is fastened to the rotor blade hub (20) of the relevant wind turbine by means of a cable suspension member and specifically on a side of the rotor plane of the relevant wind turbine that faces away from the tower, while two additional support cables are fastened to the nacelle (14) of the relevant wind turbine during operation and extend between the rotor plane and the tower on a side of the rotor plane that is close to the tower.

2. Maintenance facility according to claim 1, **characterised in that** the cable suspension member has an adjustable-diameter, three-point fastening for fastening the cable suspension member (34) to the rotor blade hub (20) of the wind turbine.

3. Maintenance facility according to claim 2, **characterised in that** the cable suspension member has a cable holder (58) that is designed to be freely rotatable about a rotational axis extending perpendicularly to a fastening plane defined by the three-point fastening.

4. Maintenance facility according to claim 3, **characterised in that** the rotational axis of the cable holder substantially corresponds to the rotor axis.

5. Maintenance facility according to claim 2, **characterised in that** the cable suspension member is designed to prevent the cable fastened thereto from twisting when the rotor turns.

6. Maintenance facility according to claim 1, wherein the maintenance platform (30) is formed of at least two sub-platforms (36) that define a working plane, the sub-platforms (36) being pivotally interconnected by a pivot joint (38) about a pivot axis extending substantially perpendicularly to the working plane.

7. Maintenance facility according to claim 6, wherein the maintenance platform (30) has four sub-platforms (36) that are interconnected by four pivot joints (38) to form a closed link chain such that each sub-platform (36) is connected to two pivot joints (38).

8. Maintenance facility according to claim 7, wherein at least one of the sub-platforms (36) extends into the interior of a square whose corners are defined by the four pivot joints (38).

9. Maintenance facility according to claim 8, wherein portions of all four sub-platforms (36) project into the interior of the square defined by the four pivot joints (38).

10. Maintenance facility according to any of claims 6 to 9, wherein the sub-platforms (36) define a workspace that is enclosed thereby and an outer contour, at least two non-adjacent pivot joints (38) being arranged in the region of the outer contour.

11. Maintenance facility according to any of claims 6 to 10, comprising a spindle drive (42) that adjustably interconnects two of the sub-platforms (36), wherein the spindle drive (42) is arranged relative to the pivot joint (38) likewise connecting the two sub-platforms (36) in such a way that the two sub-platforms (36) as well as the other sub-platforms (36) can be pivoted relative to one other in the working plane by means of the spindle drive (42).

12. Maintenance facility according to any of claims 6 to 11, comprising three cable winches (40) for moveably connecting the maintenance platform to three support cables (32).

13. Maintenance facility according to claim 12, wherein the cable winches (40) are each provided with an electric motor, the electric motors being designed to maintain a uniform speed of movement.

## Revendications

1. Dispositif d'entretien avec une plate-forme d'entretien (30) destinée à être suspendue à des câbles porteurs (32) pour l'entretien de pales de rotor (18) d'éoliennes (10), avec un mât (12), une nacelle avec un moyeu de pales de rotor (20) et un rotor (16) avec des pales de rotor (18), le dispositif d'entretien présentant au moins trois câbles porteurs et tous les câbles porteurs étant guidés de telle sorte qu'aucun des câbles porteurs ne croise un plan de rotor défini par les pales de rotor de l'éolienne respective,
**caractérisé en ce**
**qu'**au moins un des câbles porteurs est, pendant le fonctionnement, fixé au moyen d'une suspension à câbles au moyeu de pales de rotor (20) et cela sur un côté, éloigné du mât, du plan de rotor de l'éolienne respective tandis que deux autres câbles porteurs sont, pendant le fonctionnement, fixés à la nacelle (14) de l'éolienne respective et sont, sur un côté du plan de rotor proche du mât, situés entre le plan de rotor et le mât.

2. Dispositif d'entretien selon la revendication 1, **caractérisé en ce que** la suspension à câbles présente une fixation à trois points à diamètre réglable pour la fixation de la suspension à câbles (34) au moyeu de pales de rotor (20) de l'éolienne.

3. Dispositif d'entretien selon la revendication 2, **caractérisé en ce que** la suspension à câbles présente un logement de câbles (58) qui est réalisé de façon à pouvoir tourner librement autour d'un axe de rotation qui est perpendiculaire à un plan de fixation défini par la fixation à trois points.

4. Dispositif d'entretien selon la revendication 3, **caractérisé en ce que** l'axe de rotation du logement de câbles coïncide essentiellement avec l'axe de rotor.

5. Dispositif d'entretien selon la revendication 2, **caractérisé en ce que** la suspension à câbles est constituée pour empêcher une torsion du câble qui est fixée à elle lors de la rotation du rotor.

6. Dispositif d'entretien selon la revendication 1, dans lequel la plate-forme d'entretien (30) est formée d'au moins deux plates-formes partielles (36) qui définissent un plan de travail, les plates-formes partielles (36) étant, par le biais d'une articulation pivotante (38), raccordées l'une à l'autre en pivotement autour d'une axe de pivotement placé essentiellement perpendiculairement par rapport au plan de travail.

7. Dispositif d'entretien selon la revendication 6, dans lequel la plate-forme d'entretien (30) présente quatre plates-formes partielles (36) qui sont raccordées les unes aux autres par le biais de quatre articulations pivotantes (38) pour former une chaîne à maillons fermée de telle sorte que chaque plate-forme partielle (36) est raccordée à deux articulations pivotantes (38).

8. Dispositif d'entretien selon la revendication 7, dans lequel au moins une des plates-formes partielles (36) dépasse dans l'intérieur d'un quadrilatère dont les sommets sont donnés par les quatre articulations pivotantes (38).

9. Dispositif d'entretien selon la revendication 8, dans lequel des tronçons partiels des quatre plates-formes partielles (36) dépassent dans l'intérieur du quadrilatère défini par les quatre articulations pivotantes (38).

10. Dispositif d'entretien selon l'une des revendications 6 à 9, dans lequel un espace de travail entouré par les plates-formes partielles ainsi qu'un contour extérieur sont définis par ces plates-formes partielles (36), au moins deux articulations pivotantes (38) non voisines l'une de l'autre étant disposées dans la zone du contour extérieur.

11. Dispositif d'entretien selon l'une des revendications 6 à 10, avec un entraînement à broche (42) qui raccorde l'une à l'autre de façon réglable deux des plates-formes partielles (36), l'entraînement à broche (42) étant, par rapport à l'articulation pivotante (38) raccordant également les deux plates-formes partielles (36), disposé de telle sorte que les deux plates-formes partielles (36), et avec celles-ci également les plates-formes partielles (36) restantes, peuvent pivoter dans le plan de travail les unes par rapport aux autres à l'aide de l'entraînement à broche (42).

12. Dispositif d'entretien selon l'une des revendications 6 à 11, avec trois treuils à câble (40) auxquels la plate-forme d'entretien doit être raccordée de façon déplaçable avec trois câbles porteurs (32).

13. Dispositif d'entretien selon la revendication 12, dans lequel les treuils à câble (40) sont respectivement munis d'un moteur électrique, les moteurs électriques étant constitués pour maintenir une vitesse de déplacement uniforme.
